# EUROPÄISCHE PATENTSCHRIFT

(11) **EP 0 876 846 B1**
(45) Veröffentlichungstag und Bekanntmachung des Hinweises auf die Patenterteilung: **13.11.2002**
(21) Anmeldenummer: 98102847.5
(22) Anmeldetag: 19.02.1998
(51) Int. Cl.: B03B 5/00, B09C 1/02

(54) **Reinigungsgerät für aufzubereitende Materialien**
Cleaning device for materials to be treated
Dispositif de nettoyage pour matières à traiter

(30) Priorität: 09.05.1997 DE 29708313 U
(43) Veröffentlichungstag der Anmeldung: 11.11.1998
(73) Patentinhaber: FIRMA HAVER & BOECKER, D-59302 Oelde (DE)
(72) Erfinder: Rüdiger, Heinrich Dr., 48167 Münster (DE); Weinekötter, Hans-Werner, 59302 Oelde (DE)
(74) Vertreter: Stracke, Alexander, Dipl.-Ing.

(56) Entgegenhaltungen:
- DE-A- 4 019 110
- DE-A- 4 446 888
- DE-C- 3 920 800
- DE-C- 4 124 212
- US-A- 5 054 506

## Beschreibung

Die Erfindung betrifft ein Reinigungsgerät für aufzubereitende Materialien, wie aus Lagerstätten abgebautes, körniges Material, kontaminierte Böden und dergleichen, welche in einem Reinigungsbehälter mittels einer Sprüheinrichtung mit Wasser beaufschlagbar ist.

Bei einem aus der US 5 054 506 bekannten Reinigungsgerät wird das aufzubereitende Material in einen gegen die Horizontale geneigten Reinigungsbehälter eingebracht, der aus einem festen, von einem Gestell getragenen Außenbehälter und einem rotierend antreibbaren Innenbehälter besteht, der aus einem Gewebe gefertigt ist. Das Reinigungsgerät weist außerdem an der Aufgabeseite eine ortsfeste Sprüheinrichtung auf, mit der das Material besprüht wird, solange es sich im Wirkbereich der Sprüheinrichtung befindet. Durch die Schrägstellung des Reinigungsbehälters und durch die Drehung des Innenbehälters wird das Material kontinuierlich von der Aufgabeseite zur Ausgabeseite bewegt. Die Einwirkzeit der Sprüheinrichtung läßt sich demzufolge nicht beeinflussen. Die Reinigungswirkung eines solchen Gerätes ist nicht zufriedenstellend. Außerdem ist der Innenmantel einem extrem hohen Verschleiß unterlegen, bedingt durch die extrem hohe Reibung zwischen dem aufzubereitenden Material und dem Innenmantel. Dieser ist nach einer bestimmten Nutzungsdauer verschlissen und muß ersetzt werden. Dadurch kann das vorbekannte Reinigungsgerät nicht wirtschaftlich betrieben werden. Um den Verschleiß zu mindern, wird das Material durch ein Wasser-Öl-Gemisch gereinigt, was jedoch auch ungünstig ist, da Ölrückstände am Material verbleiben und das Gemisch stets aufbereitet werden muß, da unbedingt verhindert werden muß, dass Öl in eine Abwasserleitung gelangt.

Ausgehend von einem durch die US 5 054 506 vorbekannten Reinigungsgerät liegt der vorliegenden Erfindung die Aufgabe zugrunde, ein solches Reinigungsgerät so auszubilden, dass eine verschleißfreie oder verschleißarme Ausführung erreicht wird, und die darüber hinaus mit einem geringstmöglichen Verbrauch an Wasser und elektrischer Energie betrieben werden kann.

Die gestellte Aufgabe wird gelöst, indem der Reinigungsbehälter aufrecht stehend und ortsfest angeordnet ist, dass im oberen Bereich eine Materialzuführungsöffnung vorgesehen ist, dass oberhalb dieser Materialzuführungsöffnung eine rotierend antreibbare Sprüheinrichtung vorgesehen ist.

Bei der erfindungsgemäßen Ausführung kommen keine sich bewegenden Teile mit dem aufzubereitenden Material in Berührung, sodass man davon ausgehen kann, dass das Gerät verschleißfrei oder mit einem nicht nennenswerten Verschleiß über einen längeren Zeitraum arbeiten kann. Unmittelbar nach dem Eintritt in den Reinigungsbehälter wird das Material mit den aus dem Sprühdüsen austretenden Wasser beaufschlagt, welches an geeigneter Stelle aus dem Reinigungsbehälter abfließen kann, wodurch dann noch eine Spülwirkung erzielt wird. Das einlaufende Material wird durch die sich ständig ändernden Lagen der Sprühdüsen äußerst intensiv gereinigt. In weiterer Ausgestaltung ist vorgesehen, dass der Reinigungsbehälter zylindrisch ausgebildet ist, dass die Sprüheinrichtung aus einem rotierend antreibbaren Waschkopf besteht, und dass das Austretende Wasser mittels eines Hochdruckerzeugers Druckbeaufschlagt ist.

Es ist bekannt, das bei Hochdruckreinigungsgeräten der Wasserverbrauch extrem niedrig ist, trotz der guten Reinigungswirkung. Diese ist besonders auf den hohen Druck zurückzuführen unter denen das Waschwasser steht. Hochdruckgeräte arbeiten mit einem wesentlich höheren Druck, üblicherweise oberhalb 20 bar. Durch die zylindrische Gestaltung des Reinigungsbehälters wird eine konstruktiv einfache Lösung erreicht, die noch durch den rotierend antreibbaren Waschkopf als Sprüheinrichtung begünstigt wird. Die Umlaufbahn dieses Waschkopfes, der beispielsweise als rotierend antreibbarer Düsenarm ausgebildet sein kann, entspricht dann im Wesentlichen dem Querschnitt des Reinigungsbehälters. Zweckmäßigerweise ist die Sprüheinrichtung höhenverstellbar, um eine günstige Stellung in Abhängigkeit von dem zu reinigenden Material zu erreichen.

In weiterer Ausgestaltung ist vorgesehen, daß der Reinigungsbehälter am unteren, der Sprüheinrichtung gegenüber liegenden Ende ein steuerbares Austrageorgan aufweist, da dadurch je nach dem geforderten Reinigungsergebnis bzw. dem Verschmutzungsgrad des Materials die Verweildauer des Materials in dem Reinigungsbehälter eingestellt werden kann. Dieses Austrageorgan ist zweckmäßigerweise ein Pendelaufgeber, dessen Achse quer zur Längsachse des zylindrischen Reinigungsbehälters steht. Über dieses steuerbare Austrageorgan wird das aufgeschlossene Material beispielsweise auf eine nachgeschaltete Siebmaschine aufgegeben. Hier kann unter weiterer Hochdruckbebrausung, beispielsweise mit einem Druck von 6 - 8 bar, das Abtrennen der Feinbestandteile erfolgen, so daß äußerst saubere Materialien hergestellt werden. Die mittels des Austrageorgans ausgetragene Materialmenge kann in besonders vorteilhafter Weise durch den Füllstand eines dem Reinigungsbehälter vorgeschalteten Aufgabetrichters geregelt werden.

Das mittels der Sprühdüsen zugeführte Wasser muß aus dem Behälter herausgeführt werden. Es ist deshalb vorgesehen, daß in konstruktiv einfachster Weise die Wandung des Reinigungsbehälters mit Wasserablauföffnungen versehen ist. Dieses Wasser kann aufgefangen und nach Aufbereitung wieder verwendet werden, so daß das Gerät sinngemäß in einem geschlossenen Kreislauf arbeiten kann.

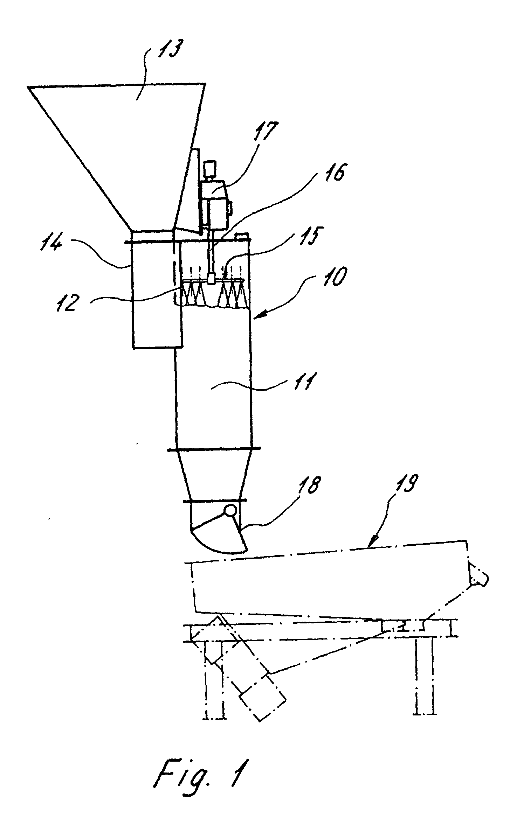

Anhand des in der Figur 1 dargestellten Reinigungsgerätes wird die Erfindung noch näher erläutert.

Das in der Figur 1 dargestellte Reinigungsgerät 10 ist mit einem aufrechtstehenden, zylindrischen Reinigungsbehälter 11 ausgerüstet, dessen Wandung im oberen Bereich mit einer Materialzuführungsöffnung 12 versehen ist. Oberhalb des Reinigungsbehälters 11 ist ein Aufgabetrichter 13 montiert, dessen Auslaufstutzen 14 seitlich neben dem Reinigungsbehälter 11 liegt.

Die Wandung des Reinigungsbehälters 11 ist in nicht näher erläuterter Weise mit Wasserablauföffnungen versehen. Im oberen Bereich des Reinigungsbehälters 11 ist darin ein Waschkopf 15 installiert, der mittels einer Antriebswelle 16 von einem außerhalb des Reinigungsbehälters 11 angeordneten Getriebemotor 17 rotierend angetrieben wird. Der Waschkopf 15 ist im dargestellten Ausführungsbeispiel ein Sprüharm, der eine Reihe von Sprühdüsen enthält. Die Wasserzufuhr erfolgt von einem nicht dargestellten Hochdruckgerät mit einem Betriebsdruck oberhalb 20 bar.

Aus der Figur 1 ergibt sich ohne weiteres, daß der Waschkopf 15 höhenverstellbar ist.

Der untere Bereich des Reinigungsbehälters 11 ist konisch ausgebildet. Unterhalb dieses Bereiches ist ein schwenkbares Austrageorgan in Form eines gesteuerten, schwenkbaren Pendelaufgebers 18 gelagert. Dieser Pendelaufgeber 18 ist um eine horizontale, quer zur Längsachse des Reinigungsbehälters 11 stehende Achse schwenkbar. Mittels dieses Pendelaufgebers, der in der Stirnansicht kreissegmentförmig gestaltet ist, gelangt das gereinigte Material auf eine, in strichpunktierten Linien angedeutete, nicht näher erläuterte Siebmaschine 19.

In der Siebmaschine 19 ist es möglich, daß mittels eines Hochdruckwasserstrahls, beispielsweise mit einem Druck von 6 bis 10 bar, das Material einer Endreinigung unterzogen wird. Der Pendelaufgeber 18 kann so gesteuert werden, daß dadurch die Verweilzeit des Materials innerhalb des Reinigungsbehälters bestimmt wird. Außerdem kann der Pendelaufgeber 18 von der Höhe des Füllstandes des Materials im Aufgabetrichter 13 geregelt werden.

Es sei noch erwähnt, daß der Getriebemotor 17 als Regeltrieb ausgebildet werden kann, so daß die Drehzahl des Waschkopfes 15 eingestellt werden kann.

## Patentansprüche

1. Reinigungsgerät (10) für aufzubereitende Materialien, wie aus Lagerstätten abgebautes körniges Material, kontaminierte Böden und dergleichen, das in einem Reinigungsbehälter (11) mittels einer Sprüheinrichtung (15) mit Wasser beaufschlagbar ist, und das austretende Wasser mittels eines Hochdruckerzeugers druckbeaufschlagt ist **dadurch gekennzeichnet, dass** der Reinigungsbehälter (11) aufrecht stehend und ortsfest angeordnet ist, dass im oberen Bereich eine Materialzuführungsöffnung (12) vorgesehen ist, und dass oberhalb dieser Materialzuführungsöffnung (12) eine rotierend antreibbare Sprüheinrichtung (15) vorgesehen ist.

2. Reinigungsgerät nach Anspruch 1, **dadurch gekennzeichnet, dass** der Reinigungsbehälter (11) zylindrisch ausgebildet ist, dass die Sprüheinrichtung aus einem rotierend antreibbaren Waschkopf (15) besteht.

3. Reinigungsgerät nach Anspruch 1, **dadurch gekennzeichnet, daß** die Sprüheinrichtung (15) höhenverstellbar ist.

4. Sprüheinrichtung nach Anspruch 1, **dadurch gekennzeichnet, daß** an dem Reinigungsbehälter (11) am unteren, der Sprüheinrichtung (15) gegenüberliegenden Ende ein vom Reinigungseffekt des Materials steuerbares Austrageorgan (18) angeordnet ist.

5. Reinigungsgerät nach Anspruch 4, **dadurch gekennzeichnet, daß** das Austrageorgan ein Pendelaufgeber (18) ist, der um eine horizontale, quer zur Mittellängsachse des Reinigungsbehälters (11) stehende Achse schwenkbar ist.

6. Reinigungsgerät nach einem oder mehreren der vorhergehenden Ansprüche 1 bis 5, **dadurch gekennzeichnet, daß** die Austragemenge des gereinigten Materials durch den Füllstand eines dem Reinigungsbehälter (11) vorgeschalteten Aufgabetrichters (13) regelbar ist.

7. Reinigungsgerät nach einem oder mehreren der vorhergehenden Ansprüche 1 bis 6, **dadurch gekennzeichnet, daß** die Wandung des Reinigungsbehälters (11) mit Wasserablauföffnungen versehen ist.

8. Reinigungsgerät nach einem oder mehreren der vorhergehenden Ansprüche, **dadurch gekennzeichnet, daß** das mittels des Austrageorgans (18) abgezogene Material auf eine Siebmaschine (19) aufgegeben wird.

## Claims

1. A cleaning device (10) for materials to be treated, such as granular material from deposits, contaminated soils and equivalent, which can be injected with water in a filtering basin (11) using a spraying device (15) and whereas the discharged water can be pressurised using a high pressure generator, **characterised in that** the filtering basin (11) is vertical and fixed permanently, **in that** a feed opening (12) is provided in the upper section for the inlet of the material, and **in that** above said material feed opening (12) a spraying device (15) is arranged, which can be driven into rotation.

2. A cleaning device according to claim 1, **characterised in that** the filtering basin (11) is cylindrical and **in that** the spraying device consists of a washing head (15) which can be driven into rotation.

3. A cleaning device according to claim 1, **characterised in that** the spraying device (15) is adjustable in height.

4. A cleaning device according to claim 1, **characterised in that** at the filtering basin (11), at the lower end opposite the spraying device (15), an extracting member (18) is arranged, which is controllable by the cleaning intensity of the material.

5. A cleaning device according to claim 4, **characterised in that** the extracting member is a pendulum feeder (18) which can pivot round a horizontal axis arranged perpendicular to the middle longitudinal axis of the filtering basin (11).

6. A cleaning device according to one or several of the previous claims 1 to 5, **characterised in that** the extracted amount of the cleaned material can be adjusted via the level of a feed funnel (13) provided upstream of the filtering basin (11).

7. A cleaning device according to one or several of the previous claims 1 to 6, **characterised in that** the walls of the filtering basin (11) are provided with water discharge openings.

8. A cleaning device to one or several of the previous claims, **characterised in that** the material withdrawn using the extracting member (18) is transferred onto a sieve jigger (19).

## Revendications

1. Appareil de nettoyage (10) pour matériaux à traiter, tels que matériau granuleux abattu dans des gisements, sols contaminés et similaires, qui peut être alimenté en eau au moyen d'un dispositif de pulvérisation (15) dans un récipient de nettoyage (11) et l'eau sortante est soumise à pression au moyen d'un générateur de haute pression, **caractérisé en ce que** le récipient de nettoyage (11) est disposé verticalement et fixement, **en ce que** dans la zone supérieure est prévue une ouverture d'arrivée (12) du matériau et **en ce qu'**au dessus de cette ouverture d'arrivée (12) du matériau est prévu un dispositif de pulvérisation (15) qui peut être entraîné en rotation.

2. Appareil de nettoyage selon la revendication 1, **caractérisé en ce que** le récipient de nettoyage (11) est réalisé cylindrique et **en ce que** le dispositif de pulvérisation est constitué d'une tête de lavage (15) pouvant être entraînée en rotation.

3. Appareil de nettoyage selon la revendication 1, **caractérisé en ce que** le dispositif de pulvérisation (15) est réglable en hauteur.

4. Dispositif de pulvérisation selon la revendication 1, **caractérisé en ce que** sur le récipient de nettoyage (11), à l'extrémité inférieure opposée au dispositif de pulvérisation (15), est disposé un organe d'extraction (18) qui peut être commandé par l'effet de nettoyage du matériau.

5. Appareil de nettoyage selon la revendication 4, **caractérisé en ce que** l'organe d'extraction est un distributeur oscillant qui peut pivoter autour d'un axe horizontal, perpendiculaire à l'axe médian longitudinal du récipient de nettoyage (11).

6. Appareil de nettoyage selon une ou plusieurs des revendications 1 à 5, **caractérisé en ce que** la quantité extraite de matériau nettoyé est réglable par le niveau de remplissage d'une trémie de chargement (13) située en amont du récipient de nettoyage (11).

7. Appareil de nettoyage selon une ou plusieurs des revendications 1 à 6, **caractérisé en ce que** la paroi du récipient de nettoyage (11) est pourvue d'orifices d'écoulement de l'eau.

8. Appareil de nettoyage selon une ou plusieurs des revendications 1 à 6, **caractérisé en ce que** le matériau extrait au moyen de l'organe d'extraction (18) est distribué sur un cribleur (19).
